# EUROPÄISCHE PATENTSCHRIFT

(11) **EP 3 448 623 B1**
(45) Veröffentlichungstag und Bekanntmachung des Hinweises auf die Patenterteilung: **09.10.2019**
(21) Anmeldenummer: 17737717.3
(22) Anmeldetag: 12.06.2017
(51) Int. Cl.: B23P 21/00, B23P 19/04, B25J 9/00, B25J 9/16, B25J 21/00, B23Q 7/14, H02K 41/02, H05K 13/04, B23Q 37/00

(54) **MONTAGEVORRICHTUNG, VERFAHREN ZUR STEUERUNG DER MONTAGEVORRICHTUNG UND VERFAHREN ZUM HERSTELLEN IN EINER MONTAGEVORRICHTUNG**
ASSEMBLY DEVICE, METHOD FOR CONTROLLING THE ASSEMBLY DEVICE AND METHD FOR MANUFACTURING IN AN ASSEMBLY DEVICE
DISPOSITIF DE MONTAGE, PROCÉDÉ DE COMMANDE DU DISPOSITIF DE MONTAGE ET PROCÉDÉ DE FABRICATION DANS UN DISPOSITIF DE MONTAGE

(30) Priorität: 14.06.2016 DE 102016007192
(43) Veröffentlichungstag der Anmeldung: 06.03.2019
(73) Patentinhaber: Thomas Magnete GmbH, 57562 Herdorf (DE)
(72) Erfinder: SCHONLAU, Jürgen, 57567 Daaden (DE); BENDER, Michael, 57567 Daaden (DE); LEINWEBER, Marc, 57290 Neunkirchen (DE); STOCKSCHLÄNDER, Jens, 57223 Kreuztal (DE); SAYN, Michael, 57562 Herdorf (DE); SPIES, Stefan, 57518 Betzdorf (DE)
(74) Vertreter: Sparing, Rolf Klaus
(86) Internationale Anmeldenummer: PCT/DE2017/100494
(87) Internationale Veröffentlichungsnummer: WO 2017/215708

(56) Entgegenhaltungen:
- WO-A2-01/89774
- DE-U1-202015 000 787
- JP-A- 2003 159 679
- JP-A- 2005 101 428
- JP-A- 2013 099 801
- JP-A- 2015 008 339
- US-A- 4 890 241
- US-A- 5 894 657
- US-A1- 2002 185 359

## Beschreibung

Die Erfindung betrifft eine Montagevorrichtung entsprechend dem Oberbegriff des unabhängigen Patentanspruchs 1, ein Verfahren zur Steuerung der Montagevorrichtung und ein Verfahren zum Herstellen von Bauteilen, Vormontagebaugruppen und Geräten in der Montagevorrichtung. Eine solcher Montagevorrichtung wird aus dem US 4 890 241 A offenbart. Die Montagevorrichtung wird zum vollautomatischen Zusammenbau von Geräten in großen Stückzahlen verwendet.

DE 20 2015 000 787 U1 zeigt eine Montagevorrichtung für den vollautomatischen Zusammenbau von Geräten mit Zellen für die Montageprozesse und einem Transport der Bauteile, Vormontagebaugruppen und Geräte durch die Mehrachsroboter, die auch die Prozessmodule beschicken. Die gezeigte Montagevorrichtung umfasst ein Produktionsgestell mit vier Füßen, zumindest einem oberen Längsträger und einem unteren Längsträger, wobei entlang des oberen Längsträgers mehrere Mehrachsroboter fest angeordnet sind, welche zu bearbeitende Werkstücke oder Vormontagebaugruppen zu Prozessmodulen zur Weiterverarbeitung bzw. Herstellung von Geräten transportieren. Nachteilig an der gezeigten Montagevorrichtung ist, dass der Aktionsradius der festmontierten Mehrachsroboter eingeschränkt ist, sodass insbesondere für den Transport über größere Strecken innerhalb der Montagevorrichtung entsprechend mehrere Mehrachsroboter benötigt werden.

US 4 890 241 A zeigt eine Montagevorrichtung zum vollautomatischen Zusammenbau elektromechanischer, elektromagnetischer und/oder elektrohydraulische Geräte, umfassend zumindest eine Produktionszelle, wobei die Produktion einen unteren Längsträger und einen oberen Längsträger umfasst. Weiter umfasst die gezeigte Montagevorrichtung ein an dem oberen Längsträger angeordnetes erstes Linearachssystem und ein auf dem ersten Linearachssystem verfahrbaren ersten Schlitten. Weiter umfasst die Montagevorrichtung einen auf dem ersten Schlitten angeordneten Mehrachsroboter und zumindest eine Antriebseinheit zum Antrieb der Bewegung des ersten Schlittens auf dem ersten Linearachssystem, wobei die Antriebseinheit als Linearmotor ausgebildet ist.

US 5 894 657 A zeigt eine Montagevorrichtung zur Montage von elektronischen Bauteilen auf Leiterplatten mit zumindest einer Produktionszelle, wobei die Produktionszelle ein Gehäuse umfasst. In dem Gehäuse ist in einem Deckenbereich ein erstes Linearachssystem angeordnet, wobei auf dem ersten Linearachssystem ein Schlitten verfahrbar angeordnet ist. Auf dem ersten Schlitten ist dabei ein erster Bearbeitungskopf angeordnet. Weiter umfasst die Montagevorrichtung einen zweiten Schlitten, auf dem ein zweiter Bearbeitungskopf angeordnet ist. Die Bearbeitungsköpfe sind dabei insbesondere als Saugvorrichtung ausgebildet, welche zum Transport von Siliziumwafern dienen.

WO 01/89774 A2 zeigt eine Montagevorrichtung, umfassend zumindest eine Produktionszelle, wobei die Produktionszelle einen Tisch als Unterbau und einen auf dem Tisch mittels vertikaler Füße aufgesetzte Stahlplatte, an der ein erster und ein zweiter Mehrachsroboter angeordnet ist. Die Mehrachsroboter sind dabei in der X-Y-Ebene mittels eines in je einem Schlitten integrierten Planarmotors verfahrbar, wobei die Mehrachsroboter jeweils auf dem jeweiligen Schlitten angeordnet sind. Weiter sind für eine Feinbewegung des Mehrachsroboters Linearmotoren umfasst.

US 2002/0185359 A1 zeigt eine Montagevorrichtung mit zumindest einer Produktionszelle, wobei die Produktionszelle einen unteren Längsträger und einen oberen Längsträger umfasst. An dem oberen Längsträger ist ein erster Mehrachsroboter entlang des oberen Längsträgers verfahrbar angeordnet. Die Linearbewegung des Mehrachsroboters wird dabei durch einen Induktionsmotor angetrieben. Die Montagevorrichtungen umfasst weiter eine zweite Produktionszelle, welche benachbart zu der ersten Produktionszelle angeordnet ist. Die zweite Produktionszelle ist dabei baugleich zu der ersten Produktionszelle ausgebildet und umfasst einen zweiten Mehrachsroboter, welcher entlang eines oberen Längsträger verfahrbar angeordnet ist. Die Längsachsen der einander benachbarten oberen Längsträger der ersten Produktionszelle und der zweiten Funktionszelle fluchten dabei miteinander. JP 2015 008339 A zeigt eine Montagevorrichtung mit zumindest eine erste Produktionszelle, wobei die Produktionszelle einen ersten oberen Längsträger und einen parallel zu dem ersten oberen Längsträger verlaufenden zweiten oberen Längsträger umfasst. Zwischen den oberen Längsträger ist ein Querträger entlang der beiden Längsträger über zwei parallel zueinander verlaufende Linearachssystem verfahrbar angeordnet, wobei an den Querträger ein drittes Linearachssystem angeordnet ist. Auf dem dritten Linearachssystem sind zwei Haltevorrichtungen gemeinsam verfahrbar angeordnet. Hierdurch sind die Haltevorrichtungen in Kombination mit den an den oberen Längsträger vorgesehenen Linearachssystemen in einer X-Y-Ebene verfahrbar. Weiter umfasst die Montagevorrichtung eine als Linearmotor ausgebildete Antriebseinheit, welche die Bewegung der Haltevorrichtungen entlang des Querträgers antreibt.

JP 2003 159697 zeigt eine Roboteranordnung, umfassend ein Gestell mit einem unteren Längsträger und einem oberen Längsträger. An dem oberen Längsträger ist dabei ein erstes Linearachssystem und parallel zu diesem an einem zweiten Längsträger ein zweites Linearachssystem angeordnet. Auf dem ersten Linearachssystem ist dabei ein erster Schlitten und auf dem zweiten Linearachssystem ein zweiter Schlitten verfahrbar angeordnet. Weiter umfasst das Robotersystem eine als Linearmotor ausgebildete Antriebseinheit, welche einen weiteren Schlitten entlang eines senkrecht zu dem ersten Linearachssystem und dem zweiten Linearachssystem angeordneten dritten Linearachssystems verfahren kann. Der weitere Schlitten ist dabei gelenkig mit einem ersten Ende eines Umlenkarms verbunden. Das zweite Ende des Umlenkarms ist mit dem ersten bzw. zweiten Schlitten gelenkig verbunden, so dass der erste Schlitten bzw. der zweite Schlitten auf dem zugeordneten Linearachssystem verfahren wird, wenn der weitere Schlitten mittels der als Linearmotor ausgebildeten Antriebseinheit verfahren wird.

Bei dem Entwurf einer eingangs genannten Montagevorrichtung treten die Forderung nach geringem Platzbedarf der Vorrichtung und die Forderung nach guter Ausnutzung des Raumes in den Zellen in einen Konflikt, denn zu einer Erzielung eines geringen Platzbedarfs der Montagevorrichtung sollen die eingesetzten Mehrachsroboter klein sein, aber zur guten Raumausnutzung sollen die Mehrachsroboter eine ausreichend große Reichweite haben.

In der Praxis werden Mehrachsrobotersysteme eingesetzt, welche meist 6-Achssysteme verwenden, sodass eine ausreichende Beweglichkeit und gleichzeitig eine gute Raumausnutzung gegeben sind. Um gleichzeitig die geforderte große Reichweite zu erreichen, werden die vorbekannten Mehrachsrobotersysteme bei Montagevorrichtungen, die insbesondere längserstreckte Produktionsstraßen umfassen, auf linear beweglichen Schlitten montiert. Diese Schlitten werden dabei entlang eines Linearachssystems angetrieben, wobei der Antrieb einen rotatorischen Servomotor umfasst, dessen rotatorische Antriebsbewegung durch geeignete mechanische Mittel, wie beispielsweise Zahnriemen, Zahnstangen und Spindelsystemen in die gewünschte Linearbewegung umgewandelt wird. Das Linearachssystem und das dazugehörige Antriebssystem sind dabei bei vorbekannten Montagevorrichtungen auf dem Boden installiert, wobei der durch den Abrieb der mechanischen Bauteile anfallende Schmutz auf den Boden bzw. in Bodennähe angeordnete Auffangvorrichtungen fällt. Somit wird durch den Schmutz der Produktionsablauf nicht negativ beeinflusst. Nachteilig wirkt sich der durch die erforderlichen Umlenksysteme aufkommende Schmutz entsprechend bei deckenhängender Montage der Mehrachsrobotersysteme und des Linearachssystems aus. Der durch den Abrieb der Getriebeteile anfallende Schmutz fällt dabei im Betrieb auf den darunter befindlichen Arbeitsraum und verschmutzt so die zu montierenden Bauteile. Ein weiterer grundlegender Nachteil der Verwendung von rotatorischen Antriebssystemen ist zudem, dass der Kostenaufwand bei einem unabhängigen Betrieb von mehr als zwei die Mehrachsrobotersysteme tragenden Schlitten erheblich steigt, da eine weitere Linearmechanik benötigt wird, welche zudem auch noch sehr platzaufwendig ist.

Es ist die Aufgabe der vorliegenden Erfindung, eine Montagevorrichtung, ein Verfahren zur Steuerung einer Montagevorrichtung bzw. ein Verfahren zum Herstellen von Bauteilen, Vormontagebaugruppen und Geräten in einer Montagevorrichtung anzugeben, welche eine kostengünstige, bauraumsparende und flexible Montage von verschiedenen Baugruppen und Geräten ermöglicht.

Diese Aufgabe wird erfindungsgemäß durch eine Montagevorrichtung, ein Verfahren zur Steuerung einer Montagevorrichtung bzw. ein Verfahren zur Steuerung einer Montagevorrichtung bzw. ein Verfahren zum Herstellen von Bauteilen, Vormontagebaugruppen und Geräten in einer Montagevorrichtung mit den Merkmalen der unabhängigen Ansprüche 1, 9 bzw.10 gelöst. Vorteilhafte Weiterbildungen der Montagevorrichtung und der Verfahren sind in den abhängigen Ansprüchen angegeben.

Nach einem Aspekt Erfindung ist eine Montagevorrichtung zum vollautomatischen Zusammenbau elektromechanischer, elektromagnetischer und/oder elektrohydraulische Geräte geschaffen, umfassend zumindest eine Produktionszelle, wobei die Produktionszelle ein Produktionsgestell mit zumindest einem unteren Längsträger und zumindest einem oberen Längsträger umfasst. Weiter umfasst die erfindungsgemäße Montagevorrichtung ein an dem oberen Längsträger angeordnetes erstes Linearachssystem, zumindest ein auf dem ersten Linearachssystem verfahrbarer erster Schlitten, ein auf dem ersten Schlitten angeordneter ersten Mehrachsroboter und zumindest eine Antriebseinheit zum Antrieb der Bewegung des ersten Schlittens auf dem ersten Linearachssystem. Die Antriebseinheit ist dabei als Linearmotor ausgebildet. Vorteilhaft entfallen die bei der Verwendung von rotatorischen Antrieben benötigten Getriebebauteile, welche die rotatorische Bewegung in eine translatorische Bewegung umwandeln. Dies ist insbesondere für den Fall vorteilhaft, dass das Linearachssystem und der darauf verfahrbare Mehrachsroboter an einem oberen Längsträger einer Produktionszelle angeordnet sind, da der ansonsten durch den Abrieb der Getriebebauteile verursachte Schmutz auf die darunter von dem Mehrachsrobotersystem zu bearbeitenden Bauteile herabfallen würde. Ein weiterer Vorteil ist, dass auch mehrere Schlitten, die über einen Linearmotor angetrieben werden, auf einem Linearachssystem unabhängig voneinander angetrieben werden können. Schließlich sind Linearmotor und das zugehörige Linearachssystem mechanisch einfacher aufgebaut und sind gegenüber vergleichbaren konventionellen Achssystemen kleiner.

Der Konflikt zwischen geringem Platzbedarf und guter Raumausnutzung wird somit vorteilhaft dadurch gelöst, dass die Mehrachsroboter auf Linearachssystemen mittels einer als Linearmotor ausgebildeten Antriebseinheit verfahren werden, wobei ihre Reichweite erheblich gesteigert wird, ohne den Platzbedarf in der Längs- oder der Querrichtung in der Montagezelle zu erhöhen, lediglich in der Höhe ergibt sich ein geringer zusätzlicher Platzbedarf.

In einer Weiterbildung ist in der Produktionszelle zumindest ein zweiter Mehrachsroboter vorgesehen. Hierdurch wird vorteilhaft erreicht, dass mehrere Arbeitsprozesse gleichzeitig innerhalb einer Produktionszelle ausgeführt werden können. In einer zweckmäßigen Ausgestaltung ist dabei vorgesehen, dass der zweite Mehrachsroboter auf einem auf dem ersten Linearachssystem verfahrbaren zweiten Schlitten angeordnet ist. Vorteilhaft wird hierdurch Bauraum zumindest in einer Richtung quer zu der Längserstreckung des Linearachssystems eingespart und so zudem eine Einsparung von Baukosten erreicht.

In einer besonders bevorzugten Ausgestaltung ist der zweite Mehrachsroboter auf einem parallel zu dem ersten Linearachssystem angeordneten zweiten Linearachssystem verfahrbaren zweiten Schlitten angeordnet. Vorteilhaft kann so jeder der beiden Mehrachsroboter innerhalb der Produktionszelle in Längsrichtung der Linearachssysteme unabhängig voneinander verfahren werden ohne miteinander zu kollidieren. Hierdurch steigt entsprechend die Flexibilität bei der Produktion bzw. der Montage der herzustellenden Geräte.

In einer besonders bevorzugten Weiterbildung ist in der Produktionszelle ein auf einem dritten Schlitten verfahrbarer dritter Mehrachsroboter vorgesehen. Vorteilhaft können so innerhalb einer Produktionszelle noch mehr Verarbeitungsvorgänge gleichzeitig durchgeführt werden. Der dritte Schlitten ist dabei bevorzugt auf einem von erstem und zweitem Linearachssystem verfahrbar angeordnet.

Zweckmäßig ist zumindest ein Prozessmodul in der Produktionszelle an dem zumindest einen unteren Längsträger angeordnet, wobei das Prozessmodul Montageprozesse oder Prüfprozesse automatisch ausführt. Besonders bevorzugt können dabei eine Mehrzahl von vorzugsweise bis zu acht Prozessmodule in der Produktionszelle angeordnet sein. Vorteilhaft lassen sich so die für die herzustellenden Geräte erforderlichen Bauteile durch die in der Produktionszelle verfahrbahren Mehrachsroboter zu den Prozessmodulen hin transportieren, woraufhin der entsprechende Montage- oder auch Prüfprozess automatisch durchgeführt wird. Dabei können entsprechend der Anzahl der vorhandenen Prozessmodule mehrere Montageprozesse bzw. Prüfprozesse für verschiedene herzustellende Geräte gleichzeitig durchgeführt werden.

Zweckmäßigerweise sind die Linearachssysteme und die Mehrachsroboter so eingerichtet, dass die Mehrachsroboter die Prozessmodule mit Bauteilen und/oder Vormontagebaugruppen der Geräte beladen oder entladen und/oder die zusammengebauten Geräte aus einem Prozessmodul entladen und in einem Gestell ablegen. Die Mehrachsroboter weisen hierzu vorteilhaft einen oder mehrere Greifer auf. Besonders bevorzugt sind die Linearachssysteme und die Mehrachsroboter so eingerichtet, dass die Mehrachsroboter die Bauteile der Geräte, Vormontagebaugruppen und/oder die Geräte mittels Greifern greifen, wenden und/oder transportieren.

Bevorzugt sind die Greifer der Mehrachsroboter so eingerichtet, dass sie eine Mehrzahl unterschiedlicher Bauteile, Vormontagebaugruppen oder Geräte einer Gerätefamilie greifen, wenden und transportieren können. Besonders vorteilhaft umfasst die Montagevorrichtung in einer Weiterbildung mehrere Produktionszellen, welche einander benachbarten angeordnet sind. Besonders bevorzugt sind die Produktionszellen der Art zueinander ausgerichtet, dass die Linearachsen der Linearachssysteme miteinander fluchten. Besonders vorteilhaft ist es so möglich, dass ein Mehrachsroboter über mehrere Produktionszellen hinweg entlang der miteinander fluchtenden Linearachsen verfahren werden kann. Vorteilhaft lassen sich so Baukosten weiter senken, wobei insbesondere ein vollautomatisches Umrüsten der Montagevorrichtung weiterhin möglich bleibt.

Aus der Kombination der Mehrachsroboter mit den Linearachssystemen ergibt sich eine neue Aufgabenstellung, es müssen nämlich die Mehrachsroboter und die Linearachssysteme gemeinsam so gesteuert werden, dass die Bewegungen der Greifer der Mehrachsroboter bestimmungsgemäß ablaufen.

Besonders bevorzugt umfasst die Montagevorrichtung eine Steuerung für eine Bewegung des Mehrachsroboters entlang der Linearachssystems und einer Mehrachsbewegung der Mehrachsroboter. Zweckmäßig ist diese Steuerung dabei als speicherprogrammierbare Steuerung ausgebildet.

Zweckmäßigerweise umfasst dabei die speicherprogrammierbare Steuerung ein erstes Steuerungsmodul zur Steuerung der Bewegung des Schlittens entlang des Linearachssystems. Vorteilhaft können so die Bewegungen der Mehrachsroboter entlang des Linearachssystems so programmiert bzw. gesteuert werden, dass eine optimierte Be- und Entladung der Prozessmodule ermöglicht wird. Besonders bevorzugt ist zudem vorgesehen, dass die speicherprogrammierbare Steuerung ein zweites Steuerungsmodul zur Steuerung einer Mehrachsbewegung der Mehrachsroboter umfasst. Hierdurch wird vorteilhaft erreicht, dass über eine gemeinsame speicherprogrammierbare Steuerung eine Bewegung der Mehrachsroboter entlang der Linearachssysteme und die Mehrachsbewegungen der Mehrachsroboter so miteinander koordiniert werden können, dass während des Montageprozesses in der Produktionszelle keine gegenseitige Behinderung der Bewegungen der Mehrachsroboter auftritt.

Nach einem Aspekt der Erfindung wird ein Verfahren zur Steuerung einer Montagevorrichtung angegeben, wobei die Montagevorrichtungen zumindest einen ersten Mehrachsroboter und einen zweiten Mehrachsroboter, welche jeweils auf einem Linearachssystem mittels eines Linearmotors angetrieben verfahrbar sind, und eine speicherprogrammierbare Steuerung umfasst. Das erfindungsgemäße Verfahren zur Steuerung umfasst dabei in einem ersten Schritt die Übermittlung der aktuellen Positionen der Mehrachsroboter auf dem Linearachssystem von einer Treiberstufe des Linearmotors an die speicherprogrammierbare Steuerung. In einem zweiten Schritt erfolgt die Übermittlung der aktuellen Positionen der Achsen der Mehrachsroboter von einer Treiberstufe einer Mehrachsteuerung der Mehrachsroboter an die speicherprogrammierbare Steuerung. In einem dritten Schritt erfolgt die Planung der für einen auszuführenden Arbeitsschritt erforderlichen Positionsänderungen der Mehrachsroboter auf dem Linearachssystem und der Achsen der Mehrachsroboter. In einem vierten Schritt erfolgt die Festlegung der zeitlichen Abfolge der auszuführenden Positionsänderungen, so dass Kollisionen der Mehrachsroboter ausgeschlossen werden. In einem fünften Schritt erfolgt dann die Bereitstellung der elektrischen Energie an den Linearmotor durch die Treiberstufe des Linearmotors und an den Mehrachsmanipulator durch die Treiberstufe der Mehrachssteuerung der Mehrachsroboter zur Ausführung der Positionsänderungen.

In einer zweckmäßigen Weiterbildung des Verfahrens zur Steuerung einer Montagevorrichtung ist vorgesehen, dass die speicherprogrammierbare elektrische Steuerung so programmiert ist, dass die Bauteile der Geräte in die Prozessmodulegeladen werden und daraus entladen werden, die Vormontagebaugruppen der Geräte geladen werden und entladen werden, die zusammengebauten Geräte aus einem Prozessmodul entladen werden und in einem Gestell abgelegt werden und die Bauteile der Geräte, die Vormontagebaugruppen und/oder die Geräte gewendet und transportiert werden.

Bevorzugt bewirkt die speicherprogrammierbare elektrische Steuerung im Zusammenwirken mit den Steuerungen der Prozessmodule sowohl einen vollautomatischen Zusammenbau der Geräte und eine Prüfung der Geräte in den Prozessmodulen als auch ein vollautomatisches Rüsten der Prozessmodule.

In einer zweckmäßigen Ausgestaltung des Verfahrens zur Steuerung einer Montagevorrichtung ist vorgesehen, dass die speicherprogrammierbare Steuerung der Mehrachsroboter und der Linearachssysteme und die Steuerungen der Prozessmodule Programme enthalten, die für unterschiedliche zu montierende Geräte unterschiedliche Programmmodule zur Steuerung der Montagevorrichtung bei dem Rüstvorgang der Prozessmodule und bei dem Zusammenbau der Geräte bereithalten.

Bevorzugt ist weiter vorgesehen, dass die unterschiedlichen Programmmodule für die Steuerung der Linearachssysteme und der Mehrachsroboter einerseits und der Steuerungen der Prozessmodule andererseits zur gerätespezifischen Steuerung der Montagevorrichtung in einer Datenbank bereitgehalten werden

Nach einem Aspekt der Erfindung wird ein Verfahren zum Herstellen von Bauteilen, Vormontagebaugruppen und Geräten in einer Montagevorrichtung angegeben, insbesondere einer Montagevorrichtung wie vorstehend beschrieben, bei dem die Montagevorrichtungen eine Mehrzahl von einander benachbarten Prozessmodulen, zumindest einen ersten Mehrachsroboter, welcher zumindest einen Greifer zum Greifen, Wenden und/oder Transportieren von Bauteilen, Vormontagebaugruppen und Geräten aufweist und eine speicherprogrammierbare Steuerung umfasst. Bei dem erfindungsgemäßen Verfahren erfolgt ein Laden und Entladen eines ersten Prozessmoduls durch Greifen, Wenden und Transportieren eines ersten Bauteils, ersten Vormontagebaugruppe bzw. ersten Gerätes mittels des Greifers des ersten Mehrachsroboters in einer ersten Arbeitsposition. Das erfindungsgemäße Verfahren zeichnet sich dabei dadurch aus, dass ein Verfahren des ersten Mehrachsroboters an einem oberen Längsträger auf einem Linearachssystem in eine zweite Arbeitsposition, in der ein Laden und Entladen eines zu dem ersten Prozessmodul benachbart angeordneten zweiten Prozessmoduls durch Greifen, Wenden und Transportieren eines zweiten Bauteils, zweiten Vormontagebaugruppe bzw. zweiten Gerätes mittels des Greifers des ersten Mehrachsroboter erfolgt, wobei der Mehrachsroboter mittels eines Linearmotors angetrieben wird. Hierdurch wird vorteilhaft erreicht, dass bei einem Umrüsten von der Produktion eines ersten Gerätes, welches in dem ersten Prozessmodul hergestellt wird, auf die Produktion eines zweiten Gerätes, welches in dem zweiten Prozessmodul hergestellt wird, kein zweiter Mehrachsroboter benötigt wird, selbst wenn der Aktionsradius des Mehrachsroboters kleiner als der Abstand zwischen dem ersten Prozessmodul und dem zweiten Prozessmodul ist. Bevorzugt erfolgen das Verfahren des Mehrachsroboters auf dem Linearachssystem und die mit dem Greifer ausgeführten Bewegungen zum Greifen, Wenden und/oder Transportieren gleichzeitig. Vorteilhaft können so die Umrüstzeiten weiter gesenkt werden. Besonders bevorzugt können auch mehrere auf einem Linearachssystem verfahrbare Mehrachsroboter in der Produktionszelle angeordnet sein. Vorteilhaft können so gleichzeitig mehrere Umrüstvorgänge bzw. Herstellungsprozesse verschiedener Geräte ausgeführt werden.

Weitere Vorteile, Merkmale und Eigenschaften der Erfindung ergeben sich aus der nachstehenden Beschreibung eines bevorzugten Ausführungsbeispiels sowie aus den abhängigen Ansprüchen.

Die Erfindung wird nachfolgend unter Bezugnahme auf die anliegenden Zeichnungen anhand eines bevorzugten Ausführungsbeispieles der Erfindung näher erläutert.
- Fig. 1: zeigt ein Ausführungsbeispiel einer Produktionszelle zur Verwendung in einer Montagevorrichtung.
- Fig. 2: zeigt eine weitere Ansicht der in Fig. 1 gezeigten Produktionszelle mit besserer Sicht auf die Steuerungen
- Fig. 3: zeigt ein Prozessmodul in einer Produktionszelle.

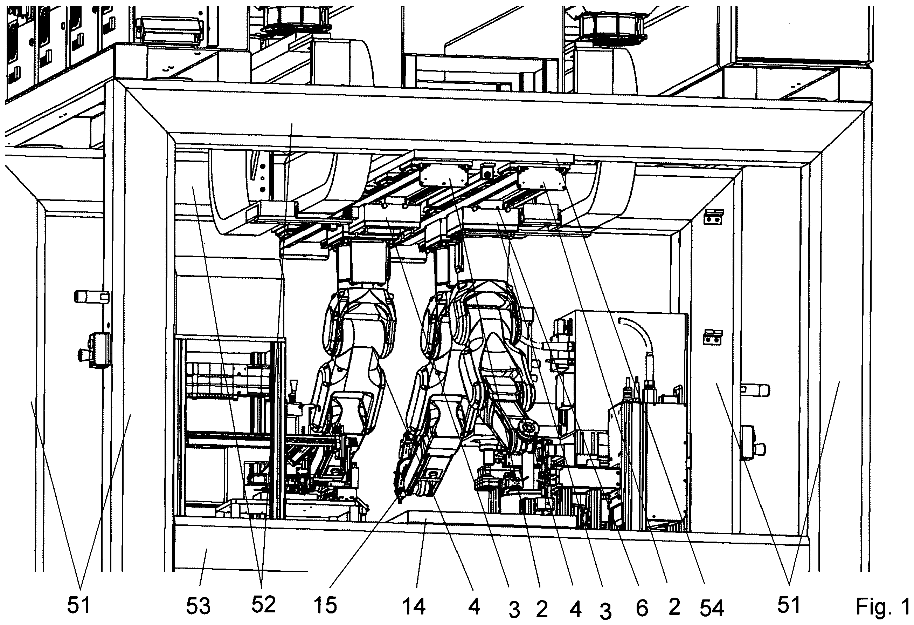

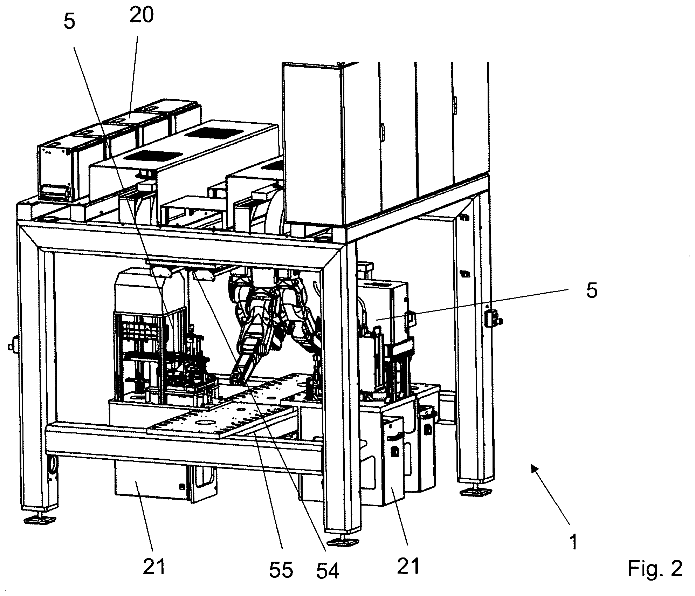

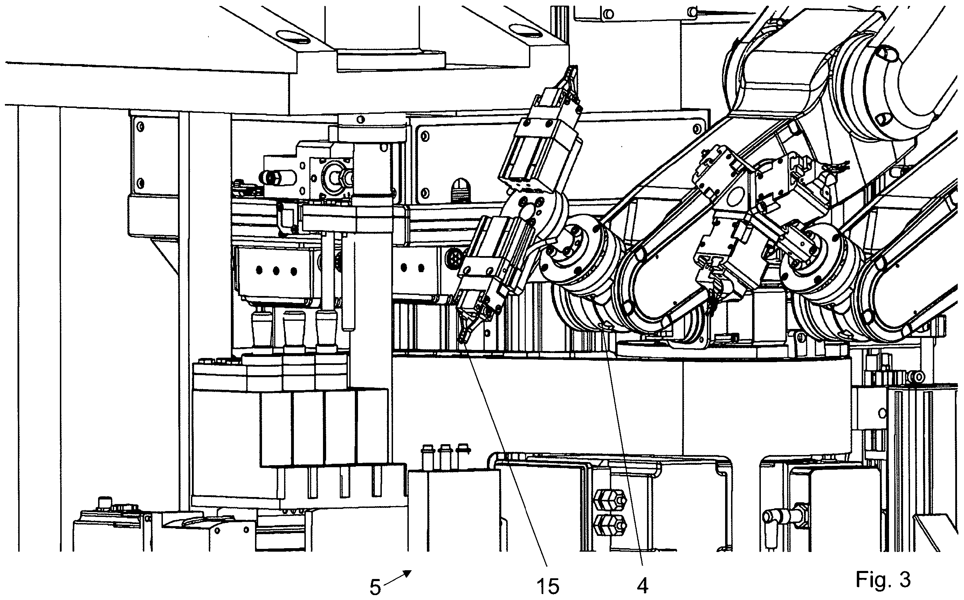

Ein Ausführungsbeispiel einer erfindungsgemäßen Montagevorrichtung gemäß Fig. 1, Fig. 2 und Fig. 3 zum vollautomatischen Zusammenbau elektromechanischer, elektromagnetischer und/oder elektrohydraulischer Geräte besteht aus einer Mehrzahl von Produktionszellen 1, von denen mindestens eine mindestens zwei Linearachssysteme 2 aufweist, deren mindestens zwei Schlitten 3 jeweils einen Mehrachsroboter 4 tragen. Die Produktionszelle 1 umfasst dabei ein Produktionsgestell 50 mit vier senkrechten Füßen 51, zwei oberen horizontalen Querträgern 52, zwei unteren horizontalen Querträgern 53, zumindest einem oberen Längsträger 54 und zumindest einem unteren Längsträger 55, wobei die Linearachssysteme 2 an der Unterseite des oberen Längsträgers 54 angeordnet sind. In den Schlitten 3 ist jeweils eine als Linearmotor ausgebildete Antriebeinheit 6 integriert, so dass die Schlitten 3 und damit die auf den Schlitten 3 montierten Mehrachsroboter 4 entlang des Linearachssystems 2 verfahrbar sind, um entlang des unteren Längsträgers 55 angeordnete Prozessmodule 5 zu beschicken. Dabei sind bis zu acht Prozessmodule 5 in der Produktionszelle 1 an dem zumindest einen unteren Längsträger 55 angeordnet, wobei die Prozessmodule Montageprozesse oder Prüfprozesse ausführen.

Dabei sind die Linearachssysteme 2 und die Mehrachsroboter 4 so eingerichtet, dass die Mehrachsroboter 4 die Prozessmodule 5 mit Bauteilen und/oder Vormontagebaugruppen der zu montierenden Geräte beladen oder entladen und/oder die zusammengebauten Geräte aus einem Prozessmodul 5 entladen und in einem Gestell 14, welches auf dem unteren Längsträger 55 angeordnet ist, ablegen.

Weiterhin sind die Linearachssysteme 2 und die Mehrachsroboter 4 in dem in der Fig. 1 gezeigten Ausführungsbeispiel so eingerichtet, dass die Mehrachsroboter 4 die Bauteile der Geräte, Vormontagebaugruppen und/oder die Geräte mittels Greifern 15 greifen, wenden und/oder transportieren.

Die Greifer 15 der Mehrachsroboter sind vorzugsweise so eingerichtet, dass sie eine Mehrzahl unterschiedlicher Bauteile, Vormontagebaugruppen oder Geräte einer Gerätefamilie greifen, wenden und transportieren können.

Zum Betrieb der Montagevorrichtung zum vollautomatischen Zusammenbau und zur Prüfung elektromechanischer, elektromagnetischer oder elektrohydraulischer Geräte werden die Mehrachsroboter 4 und die Linearachssysteme 2 der Montagevorrichtung von einer speicherprogrammierbaren elektrischen Steuerung 20 gesteuert, die so programmiert ist, dass
- die Bauteile der Geräte in die Prozessmodule 5 geladen werden und daraus entladen werden und
- die Vormontagebaugruppen der Geräte geladen werden und entladen werden
- die zusammengebauten Geräte aus einem Prozessmodul entladen werden und in einem Gestell 14 abgelegt werden
- die Bauteile der Geräte, die Vormontagebaugruppen und/oder die Geräte gewendet und transportiert werden.

Die speicherprogrammierbare elektrische Steuerung 20 bewirkt vorzugsweise im Zusammenwirken mit den Steuerungen 21 der Prozessmodule 5 sowohl einen vollautomatischen Zusammenbau der Geräte und eine Prüfung der Geräte in den Prozessmodulen 5 als auch ein vollautomatisches Rüsten der Prozessmodule 5, indem sie die Bewegungen der Mehrachsroboter 4 und der sie tragenden Linearachssysteme 2 steuert.

Dazu enthalten die speicherprogrammierbare Steuerung 20 der Mehrachsroboter 4 und der Linearachssysteme 2 und die Steuerungen 21 der Prozessmodule 5 Programme, die für unterschiedliche zu montierende Geräte unterschiedliche Programmmodule zur Steuerung der Montagevorrichtung bei dem Rüstvorgang der Prozessmodule 5 und bei dem Zusammenbau der Geräte bereithalten.

Vorzugsweise werden die unterschiedlichen Programmmodule für die Steuerung 20 der Linearachssysteme 2 und der Mehrachsroboter 4 einerseits und der Steuerungen 21 der Prozessmodule 5 andererseits zur gerätespezifischen Steuerung der Montagevorrichtung in einer Datenbank bereitgehalten.

### Liste der Bezugszeichen

- 1.: Produktionszelle der Montagevorrichtung
- 2.: Linearachssystem
- 3.: Schlitten
- 4.: Mehrachsroboter
- 5.: Prozessmodul
- 6.: Antriebseinheit
- 14.: Gestell
- 15.: Greifer
- 20.: Steuerung der Linearachssysteme und der Mehrachsroboter
- 21.: Steuerung des Prozessmoduls
- 51.: senkrechte Füße
- 52.: obere horizontale Querträger
- 53.: untere horizontale Querträger
- 54.: oberer Längsträger
- 55.: unterer Längsträger

## Patentansprüche

1. Montagevorrichtung zum vollautomatischen Zusammenbau elektromechanischer, elektromagnetischer und/oder elektrohydraulischer Geräte, umfassend
zumindest eine Produktionszelle (1), wobei die Produktionszelle (1) zumindest einen unteren Längsträger (55) und zumindest einen oberen Längsträger (54) umfasst,
ein an dem oberen Längsträger (54) angeordnetes erstes Linearachssystem (2),
zumindest einen auf dem ersten Linearachssystem (2) verfahrbaren ersten Schlitten (3),
einen auf dem ersten Schlitten (3) angeordneten ersten Mehrachsroboter (4), und
zumindest eine Antriebseinheit (6) zum Antrieb der Bewegung des ersten Schlittens (3) auf dem ersten Linearachssystem (2), wobei die Antriebseinheit (6) als Linearmotor ausgebildet ist,
**dadurch gekennzeichnet,**
**dass** die Montagevorrichtung einen auf einem zweiten Schlitten (3) angeordneten zweiten Mehrachsroboter umfasst, und
**dass** der zweite Mehrachsroboter (4) auf einem parallel zu dem ersten Linearachssystem (2) angeordneten zweiten Linearachssystem (2) mittels eines Linearmotors (6) angetrieben verfahrbar angeordnet ist.

2. Montagevorrichtung nach Anspruch 1, **dadurch gekennzeichnet, dass** der Linearmotor in dem Schlitten (3) integriert ist.

3. Montagevorrichtung nach Anspruch 1 oder 2, **dadurch gekennzeichnet, dass** in der Produktionszelle (1) ein auf einem dritten Schlitten (3) verfahrbarer dritter Mehrachsroboter (4) vorgesehen ist.

4. Montagevorrichtung nach Anspruch 3, **dadurch gekennzeichnet, dass** der dritte Schlitten (3) auf einem von erstem und zweitem Linearachssystem (2) verfahrbar angeordnet ist.

5. Montagevorrichtung nach einem der vorhergehenden Ansprüche,
**dadurch gekennzeichnet, dass** zumindest ein Prozessmodul (5) in der Produktionszelle (1) an dem zumindest einen unteren Längsträger (55) angeordnet ist, welches Montageprozesse oder Prüfprozesse automatisch ausführt.

6. Montagevorrichtung nach einem der vorhergehenden Ansprüche,
**dadurch gekennzeichnet, dass** mehrere Produktionszellen (5) umfasst sind, welche einander benachbart angeordnet sind.

7. Montagevorrichtung nach Anspruch 6, **dadurch gekennzeichnet, dass** die Linearachsen der Linearachssysteme (2) der einander benachbarten Produktionszellen (1) miteinander fluchten.

8. Montagevorrichtung nach einem der vorhergehenden Ansprüche,
**dadurch gekennzeichnet, dass** eine Steuerung (20) für die Bewegung des Mehrachsroboters. (4) entlang des Linearachssystems (2) und einer Mehrachsbewegung der Mehrachsroboter (4) umfasst ist.

9. Verfahren zur Steuerung einer Montagevorrichtung nach einem der Ansprüche 1 bis 8, wobei die Montagevorrichtung eine Steuerung (20) umfasst,
mit den Schritten Übermittlung der aktuellen Positionen der Mehrachsroboter (4) auf dem Linearachssystem (2) von einer Treiberstufe des Linearmotors (6) an die Steuerung (20),
Übermittlung der aktuellen Positionen der Achsen der Mehrachsroboter (4) von einer Treiberstufe einer Mehrachsteuerung der Mehrachsroboter (4) an die Steuerung (20),
Planung der für einen auszuführenden Arbeitsschritt erforderlichen Positionsänderungen der Mehrachsroboter (4) auf den Linearachssystemen (2) und der Achsen der Mehrachsroboter (4),
Festlegung der zeitliche Abfolge der auszuführenden Positionsänderungen, so dass Kollisionen der Mehrachsroboter (4) ausgeschlossen werden, und
Bereitstellung elektrischer Energie an den Linearmotor (6) durch die Treiberstufe des Linearmotors und an den Mehrachsmanipulator durch die Treiberstufe der Mehrachssteuerung der Mehrachsroboter (4) zur Ausführung der Positionsänderungen.

10. Verfahren zum Herstellen von Bauteilen, Vormontagebaugruppen und Geräten in einer Montagevorrichtung nach einem der Ansprüche 1 bis 8, bei dem die Montagevorrichtungen
eine Mehrzahl von einander benachbarten Prozessmodulen (5),
zumindest einen ersten Mehrachsroboter (4), welcher zumindest einen Greifer (15) zum Greifen, Wenden und/oder Transportieren von Bauteilen, Vormontagebaugruppen und Geräten aufweist und
eine speicherprogrammierbare Steuerung (20)
umfasst, wobei ein Laden und Entladen eines ersten Prozessmoduls (5) durch Greifen, Wenden und Transportieren eines ersten Bauteils, ersten Vormontagebaugruppe bzw. ersten Gerätes mittels des Greifers (15) des ersten Mehrachsroboters (4) in einer ersten Arbeitsposition erfolgt, wobei das Verfahren des ersten Mehrachsroboters (4) an einem oberen Längsträger (54) auf einem Linearachssystem (2) in eine zweite Arbeitsposition erfolgt, in der ein Laden und Entladen eines zu dem ersten Prozessmodul (5) benachbart angeordneten zweiten Prozessmoduls (5) durch Greifen, Wenden und Transportieren eines zweiten Bauteils, zweiten Vormontagebaugruppe bzw. zweiten Gerätes mittels des Greifers (15) des ersten Mehrachsroboter (4) erfolgt,
wobei der Mehrachsroboter mittels eines Linearmotors (6) angetrieben wird.

## Claims

1. Mounting device for the fully automatic assembly of electromechanical, electromagnetic and/or electrohydraulic apparatuses, the device comprising
at least one production cell (1), the production cell (1) comprising at least one lower longitudinal beam (55) and at least one upper longitudinal beam (54),
a first linear axis system (2) arranged on the upper longitudinal beam (54),
at least one first carriage (3) being moveable on the first linear axis system (2),
a first multi-axis robot (4) arranged on the first carriage (3), and
at least one drive unit (6) for driving the movement of the first carriage (3) on the first linear axis system (2), the drive unit (6) being designed as a linear motor,
**characterized in**
**that** the mounting device comprises a second multi-axis robot arranged on a second carriage (3), and
**that** the second multi-axis robot (4) is arranged on a second linear axis system (2) in parallel with the first linear axis system (2) being moveably driven by means of a linear motor (6).

2. Mounting device according to claim 1, **characterized in that** the linear motor is integrated in the carriage (3).

3. Mounting device according to claim 1 or 2, **characterized in that** a third multi-axis robot (4) being moveable on a third carriage (3) is provided in the production cell (1).

4. Mounting device according to claim 3, **characterized in that** the third carriage (3) is movably arranged on one of the first and second linear axis systems (2).

5. Mounting device according to any of the preceding claims, **characterized in that** at least one process module (5) automatically carrying out mounting processes or test processes is arranged in the production cell (1) on the at least one lower longitudinal beam (55).

6. Mounting device according to any of the preceding claims, **characterized in that** a plurality of production cells (5) are comprised which are arranged adjacent to one another.

7. Mounting device according to claim 6, **characterized in that** the linear axes of the linear axis systems (2) of the adjacent production cells (1) are aligned with one another.

8. Mounting device according to any of the preceding claims, **characterized in that** a controller (20) for the movement of the multi-axis robot (4) along the linear axis system (2) and for a multi-axis movement of the multi-axis robot (4) is comprised.

9. Method for controlling a mounting device according to any of claims 1 to 8, wherein the mounting device comprises a controller (20),
the method comprising the steps of
transmitting the current positions of the multi-axis robots (4) on the linear axis system (2) from a driver stage of the linear motor (6) to the controller (20),
transmitting the current positions of the axes of the multi-axis robots (4) from a driver stage of a multi-axis controller of the multi-axis robot (4) to the controller (20),
planning the required position changes of the multi-axis robots (4) on the linear axis systems (2) and the axes of the multi-axis robots (4), for a working step to be carried out,
determining the temporal sequence of the position changes to be carried out, such that collisions of the multi-axis robots (4) are precluded, and
providing electrical energy to the linear motor (6) via the driver stage of the linear motor and to the multi-axis manipulator via the driver stage of the multi-axis controller of the multi-axis robots (4) for carrying out the position changes.

10. Method for producing components, pre-mounting assemblies and apparatuses in a mounting device according to any of claims 1 to 8, in which the mounting devices comprise
a plurality of adjacent process modules (5) and
at least one first multi-axis robot (4), which has at least one gripper (15) for gripping, turning and/or transporting components, pre-mounting assemblies and apparatuses and comprises a programmable logic controller (20),
wherein a loading and unloading of a first process module (5) by gripping, turning and transporting a first component, first pre-mounting assembly or first apparatus by means of the gripper (15) of the first multi-axis robot (4) is carried out in a first working position,
wherein the moving of the first multi-axis robot (4) on an upper longitudinal beam (54) on a linear axis system (2) into a second working position is carried out
in which a loading and unloading of a second process module (5), which is arranged adjacent to the first process module (5), is carried out by gripping, turning and transporting a second component, second pre-mounting assembly or second apparatus by means of the gripper (15) of the first multi-axis robot (4),
wherein the multi-axis robot is driven by a linear motor (6).

## Revendications

1. Dispositif de montage pour l'assemblage entièrement automatique de dispositifs électromécaniques, électromagnétiques et/ou électrohydrauliques, comprenant
au moins une cellule de production (1), la cellule de production (1) comprenant au moins un longeron inférieur (55) et au moins un longeron supérieur (54),
un premier système d'axes linéaires (2) disposé sur le longeron supérieur (54), au moins un premier chariot (3) mobile sur le premier système d'axes linéaires (2),
un premier robot multiaxes (4) disposé sur le premier chariot (3), et
au moins une unité d'entraînement (6) pour entraîner le mouvement du premier chariot (3) sur le premier système d'axes linéaires (2), l'unité d'entraînement (6) étant conçue comme un moteur linéaire,
**caractérisé en ce**
**que** le dispositif de montage comprend un deuxième robot multiaxes disposé sur un deuxième chariot (3), et
**que** le deuxième robot multiaxes (4) est disposé de manière mobile sur un deuxième système d'axes linéaires (2) disposé de manière parallèle au premier système d'axes linéaires (2) entraîné au moyen d'un moteur linéaire (6).

2. Dispositif de montage selon la revendication 1, **caractérisé en ce que** le moteur linéaire est intégré dans le chariot (3).

3. Dispositif de montage selon la revendication 1 ou 2, **caractérisé en ce qu'**un troisième robot multiaxes (4) mobile sur un troisième chariot (3) est prévu dans la cellule de production (1).

4. Dispositif de montage selon la revendication 3, **caractérisé en ce que** le troisième chariot (3) est disposé de manière mobile sur le premier ou sur le deuxième système d'axes linéaires (2).

5. Dispositif de montage selon l'une des revendications précédentes, **caractérisé en ce qu'**au moins un module de traitement (5) est disposé dans la cellule de production (1) sur l'au moins un longeron inférieur (55), lequel module exécute automatiquement des processus de montage ou de vérification.

6. Dispositif de montage selon l'une des revendications précédentes, **caractérisé en ce qu'**il comprend une pluralité de cellules de production (5) disposées de manière adjacente les unes aux autres.

7. Dispositif de montage selon la revendication 6, **caractérisé en ce que** les axes linéaires des systèmes d'axes linéaires (2) des cellules de production (1) adjacentes sont alignés.

8. Dispositif de montage selon l'une des revendications précédentes, **caractérisé en ce qu'**il comprend une commande (20) pour le déplacement du robot multiaxes (4) le long du système d'axes linéaires (2) et d'un déplacement multiaxes des robots multiaxes (4).

9. Procédé de commande d'un dispositif de montage selon l'une des revendications 1 à 8, le dispositif de montage comprenant une commande (20), comportant les étapes de
transmission des positions actuelles des robots multiaxes (4) sur le système d'axes linéaires (2) d'un étage d'attaque du moteur linéaire (6) à la commande (20),
transmission des positions actuelles des axes des robots multiaxes (4) d'un étage d'attaque d'une commande multiaxes des robots multiaxes (4) à la commande (20),
planification des modifications de position requises des robots multiaxes (4) sur les systèmes d'axes linéaires (2) et sur les axes des robots multiaxes (4) pour une étape de travail à exécuter,
détermination de la chronologie des modifications de position à effectuer, de manière à empêcher des collisions des robots multiaxes (4), et
alimentation du moteur linéaire (6) en énergie électrique par l'étage d'attaque du moteur linéaire, et du manipulateur multiaxes par l'étage d'attaque de la commande multiaxes des robots multiaxes (4) afin d'effectuer les modifications de position.

10. Procédé de fabrication de composants, de modules de pré-assemblage et de dispositifs dans un dispositif de montage selon l'une des revendications 1 à 8, le dispositif de montage comprenant
une pluralité de modules de traitement adjacents (5),
au moins un premier robot multiaxes (4) présentant au moins un préhenseur (15) pour saisir, tourner et/ou transporter des composants, des modules de pré-assemblage et des dispositifs, et
une commande programmable (20),
dans lequel a lieu le chargement et le déchargement d'un premier module de traitement (5) consistant à saisir, tourner et transporter un premier composant, un premier module de pré-assemblage ou un premier dispositif au moyen du préhenseur (15) du premier robot multiaxes (4) dans une première position de travail,
dans lequel le déplacement du premier robot multiaxes (4) sur un longeron supérieur (54) sur un système d'axes linéaires (2) a lieu vers une seconde position de travail dans laquelle a lieu un chargement et un déchargement d'un second module de traitement (5) adjacent au premier module de traitement (5), consistant à saisir, tourner et transporter un second composant, un second module de pré-assemblage ou un second dispositif au moyen du préhenseur (15) du premier robot multiaxes (4), le robot multiaxe étant entraîné par un moteur linéaire (6).
